# EUROPEAN PATENT APPLICATION

(11) **EP 4 462 863 A1**
(43) Date of publication of application: **13.11.2024**
(21) Application number: 22917710.0
(22) Date of filing: 04.01.2022
(51) Int. Cl.: H04W 36/00, H04W 40/24

(54) **IAB-NODE DEVICE, IAB-DONOR DEVICE, AND PATH MIGRATION METHOD**

(71) Applicant: FUJITSU LIMITED, Kawasaki-shi, Kanagawa 211-8588 (JP)
(72) Inventor: LU, Yang, Beijing 100022 (CN)
(74) Representative: Haseltine Lake Kempner LLP
(86) International application number: PCT/CN2022/070175
(87) International publication number: WO 2023/130232

(57) **Abstract**

Embodiments of the present disclosure provide an IAB-node device, an IAB-donor device and a path migration method. A parent node of an IAB-node before migration uses a first donor distribution unit and a parent node of the IAB-node after the migration uses a second donor distribution unit, the method comprising: before an IAB-MT of the IAB-node performs handover, the IAB-node or a child node receives path migration configuration of uplink data transmitted by a network device, and the IAB-node or the child node applies the path migration configuration when the IAB-MT completes the handover.

## Description

### TECHNICAL FIELD

The embodiments of the present disclosure relate to the communication field.

### BACKGROUND

Future seamless cellular network deployment requires very flexible and ultra-dense new radio (NR) cell deployment, an ultra-dense network is one of goals of 5G, and deploying NR network that does not require wired backhaul is very important to realize the ultra-dense network of 5G. Because a 5G millimeter wave reduces a coverage of a cell, a wireless self-backhaul system needs multi-hops to meet deployment requirements. 5G's high bandwidth, massive Multiple Input Multiple Output (MIMO) and beam system enables it easier to develop a wireless self-backhaul system of an ultra-dense NR cell for 5G than for LTE. In order to develop such multi-hop system with wireless self-backhaul, 3GPP starts research and standardization of an Integrated Access and Backhaul (IAB) project at Rel-16.

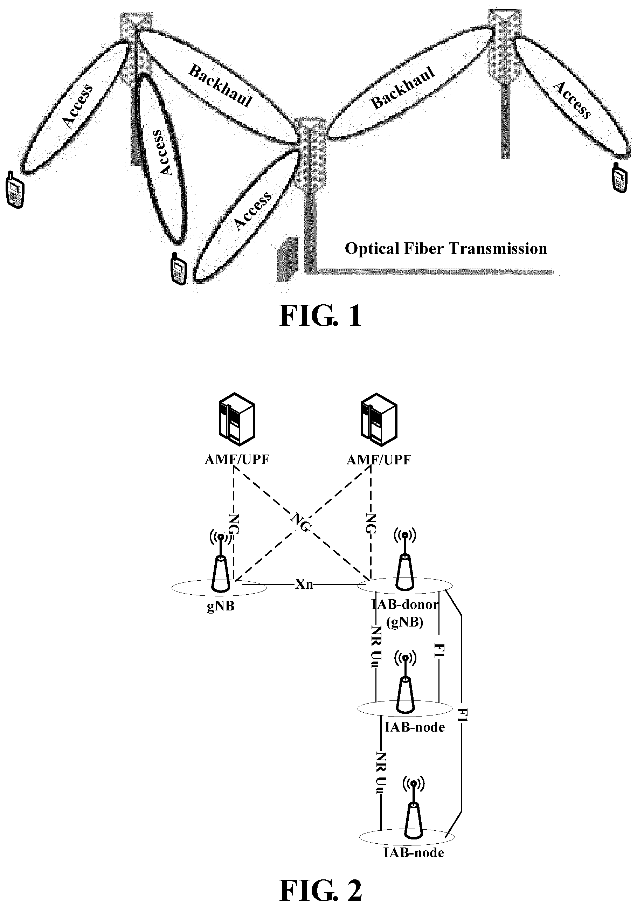

FIG. 1 is a schematic diagram of an IAB system. As shown in FIG. 1, in the IAB system, wireless transmission on Uu air interface of NR is used for access and backhaul, a relay node simultaneously supports access and backhaul functions. The relay node multiplexes an access link and a backhaul link in a time domain, a frequency domain or a space domain, and the access link and the backhaul link may use the same or different frequency bands.

Under an IAB network architecture, the relay node refers to an IAB-node (IAB node) that simultaneously supports access and backhaul functions. A last-hop access node at a network side is called IAB-donor that supports a gNB function and supports IAB-node access. All UE data may be backhauled to the IAB-Donor via the IAB-node in one or more hops.

The function of the IAB-node includes two parts, one is a gNB-DU function, called IAB-DU (distributed unit), and the other is a UE function, called IAB-MT (mobile terminal). The IAB-DU realizes a function of a network side device, is connected to a downstream child IAB-node (child IAB node or called a child node for short), provides NR air interface access for a UE and the downstream child IAB-node, and establishes an F1 connection with IAB Donor-CU (donor centralized unit). The IAB-MT realizes a partial function of a terminal equipment, is connected to an upstream parent IAB-node (parent IAB node or called a parent node for short) or IAB-Donor DU. The IAB-MT includes functions of a physical layer, a layer 2, Radio Resource Control (RRC) and a Non-Access Stratum (NAS) layer, and is further connected to the IAB Donor-CU and a Core Network (CN) indirectly.

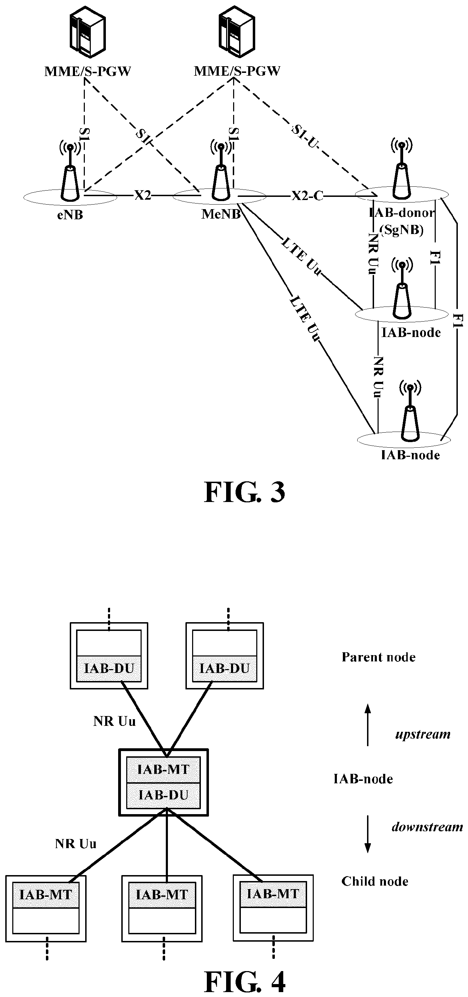

In the IAB system, the IAB-node may be accessed to a network by using a Standalone (SA) mode or an E-UTRA-NRDualConnectivity (EN-DC) mode. FIG. 2 is a schematic diagram of an IAB architecture in the SA mode. FIG. 3 is a schematic diagram of an IAB architecture in the EN-DC mode.

FIG. 4 is a schematic diagram of an IAB node (IAB-node), a parent node (parent IAB-node) and a child node (child IAB-node). As shown in FIG. 4, IAB-DU of the IAB node as a network side connects to IAB-MT of the child node, and the IAB-MT of the IAB node as a terminal side connects to the IAB-DU of the parent node.

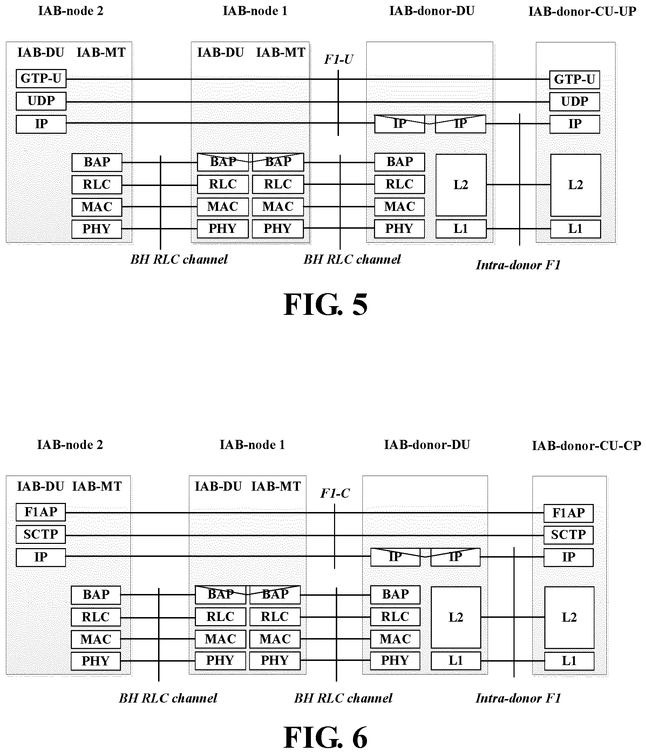

FIG. 5 is a schematic diagram of an F1 user plane (F1-U) protocol stack between the IAB-DU and the IAB-Donor CU. FIG. 6 is a schematic diagram of an F1 control plane (F1-C) protocol stack between the IAB-DU and the IAB donor-CU. As shown in FIGS. 5 and 6, the F1-U and the F1-C are established on a transmission (IP) layer between the IAB-DU and the IAB donor-CU, FIGS. 5 and 6 show two-hops wireless backhaul and one-hop wired backhaul.

On a backhaul link, the transmission (IP) layer is carried on a Backhaul Adaptive Protocol (BAP) sublayer, a BAP entity in the IAB-node implements a routing function in the IAB system, the IAB-donor CU provides a routing table. A BAP PDU (Protocol Data Unit) is transmitted in an RLC (Radio Link Control) channel of the backhaul link, multiple RLC channels of the backhaul link may be configured by the IAB-donor to carry services with different priorities and QoS (Quality of Service), the BAP PDU is mapped by the BAP entity to different backhaul RLC channels.

It should be noted that the above introduction to the technical background is just to facilitate a clear and complete description of the technical solutions of the present disclosure, and is elaborated to facilitate the understanding of persons skilled in the art, it cannot be considered that these technical solutions are known by persons skilled in the art just because these solutions are elaborated in the Background of the present disclosure.

### SUMMARY

The inventor finds that in some circumstances after a network topology changes, if a transmission path of a migrating node after migration changes the donor-DU, uplink data of the migrating node cannot be transmitted to the donor-CU. Moreover, if a target donor-DU has an IP address filtering function, uplink data containing an IP address assigned by a source donor-DU will be discarded, thus resulting in a longer transmission delay and service interruption time.

In order to solve at least one of the above problems, the embodiments of the present disclosure provide an IAB-node device, an IAB-donor device and a path migration method.

According to one aspect of the embodiments of the present disclosure, a path migration method is provided, a parent node of an IAB-node before migration uses a first donor distribution unit (donor-DU) and a parent node of the IAB-node after the migration uses a second donor distribution unit, the method including:
an IAB-node or child node, before an IAB-MT of the IAB-node performs handover, receives path migration configuration of uplink data transmitted by a network device; and
the IAB-node or child node applies the path migration configuration when the IAB-MT completes the handover.

According to another aspect of the embodiments of the present disclosure, an IAB-node device is provided, a parent node of the IAB-node before migration uses a first donor distribution unit and a parent node of the IAB-node after the migration uses a second donor distribution unit, the IAB-node device including:
a receiving portion configured to, before an IAB-MT of an IAB-node performs handover, receive path migration configuration of uplink data transmitted by a network device; and
a processing portion configured to apply the path migration configuration when the IAB-MT completes the handover.

According to another aspect of the embodiments of the present disclosure, a path migration method is provided, a parent node of an IAB-node before migration uses a first donor distribution unit (donor-DU) and a parent node of the IAB-node after the migration uses a second donor distribution unit, the first donor-DU belonging to a first donor centralized unit, and the second donor-DU belonging to a second donor centralized unit, the method including:
the first donor centralized unit (donor-CU) transmits a path migration request message to the second donor-CU before transmitting a handover request for an IAB-MT of the IAB-node; and
the first donor-CU receives a path migration response message transmitted by the second donor-CU.

According to another aspect of the embodiments of the present disclosure, an IAB-donor device is provided, a parent node of an IAB-node before migration uses a first donor distribution unit and a parent node of the IAB-node after the migration uses a second donor distribution unit, the first donor distribution unit belonging to a first donor centralized unit, and the second donor distribution unit belonging to a second donor centralized unit, and the device including:
a transmitting portion configured to transmit a path migration request message to the second donor centralized unit before transmitting a handover request for an IAB-MT of the IAB-node; and
a receiving portion configured to receive a path migration response message transmitted by the second donor centralized unit.

According to another aspect of the embodiments of the present disclosure, an IAB system is provided, including an IAB-donor device and an IAB-node device;
a parent node of the IAB-node device before migration uses a first donor distribution unit and a parent node of the IAB-node device after the migration uses a second donor distribution unit, before an IAB-MT of an IAB-node performs handover, the IAB-node device receives path migration configuration of uplink data transmitted by a network device, and applies the path migration configuration when the IAB-MT completes the handover.

One of advantageous effects of the embodiments of the present disclosure lies in: before an IAB-MT of an IAB-node performs handover, the IAB-node or a child node receives path migration configuration of uplink data transmitted by a network device, and the IAB-node or the child node applies the path migration configuration when the IAB-MT completes the handover. Thereby, the problem that uplink data is discarded can be reduced or avoided, a transmission delay and service interruption time is reduced.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended supplements, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on the drawings under the premise that they do not pay inventive labor. In the drawings:
FIG. 1 is a schematic diagram of an IAB system;
FIG. 2 is a schematic diagram of an IAB architecture in a SA mode;
FIG. 3 is a schematic diagram of an IAB architecture in an EN-DC mode;
FIG. 4 is a schematic diagram of a parent node (parent IAB-node) and a child node (child IAB-node);
FIG. 5 is a schematic diagram of an F1-U protocol stack of the IAB system;
FIG. 6 is a schematic diagram of an F1-C protocol stack of the IAB system;
FIG. 7 is a schematic diagram of IAB system routing;
FIG. 8 is a schematic diagram of path migration;
FIG. 9 is a schematic diagram of path migration in the embodiments of the present disclosure;
FIG. 10 is a schematic diagram of a path migration method in the embodiments of the present disclosure;
FIG. 11 is an example graph of path migration in the embodiments of the present disclosure;
FIG. 12 is a signaling flow graph of path migration in the embodiments of the present disclosure;
FIG. 13 is another example graph of path migration in the embodiments of the present disclosure;
FIG. 14 is another example graph of path migration in the embodiments of the present disclosure;
FIG. 15 is another signaling flow graph of path migration in the embodiments of the present disclosure;
FIG. 16 is a schematic diagram of an IAB-node device in the embodiments of the present disclosure;
FIG. 17 is a schematic diagram of an IAB-donor device in the embodiments of the present disclosure;
FIG. 18 is a schematic diagram of an IAB device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached supplements.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

A routing function of an IAB system is implemented by a BAP layer, each IAB-node stores a routing configuration (BH routing configuration) and an RLC channel mapping configuration (BH RLC Channel Mapping Configuration). A BAP entity performs routing according to the routing configuration, the RLC channel mapping configuration, and a routing identifier (Routing ID) in a BAP layer data packet header. The Routing ID contains a destination BAP address and a path identifier.

The routing configuration contains a mapping relationship between the Routing ID and a BAP address of a next-hop node. The RLC channel mapping configuration contains a mapping relationship among a BAP address of a prior-hop node, an ingress link RLC channel ID, a BAP address of a next-hop node and an egress link RLC channel ID.

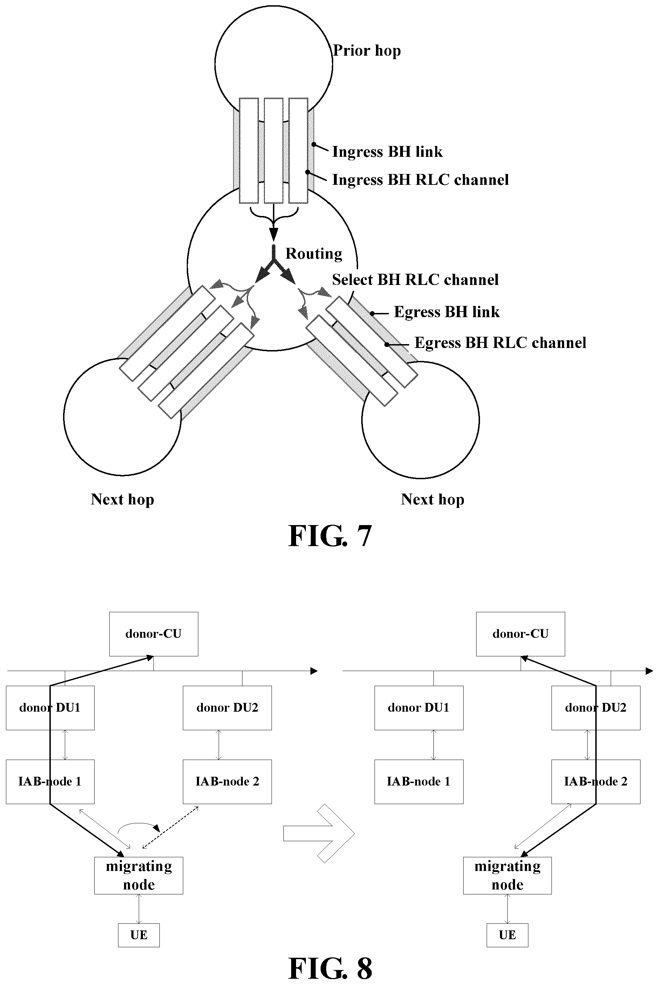

FIG. 7 is a schematic diagram of IAB system routing. As shown in FIG. 7, for each data packet, a BAP address of a next-hop node may be found from a routing configuration via Routing ID of a data packet header. A BAP address of a prior-hop node and an ingress link RLC channel ID are all known. In this way, after the BAP address of the next-hop node is determined, an egress link RLC channel ID can be found via an RLC channel mapping configuration according to the BAP address of the prior-hop node + the ingress link RLC channel ID + the BAP address of the next-hop node.

The IAB-donor DU stores a routing configuration (BH routing configuration) and a downlink RLC channel mapping configuration (Downlink Traffic to BH RLC Channel Mapping Configuration). The IAB-donor DU performs routing according to the routing configuration, the RLC channel mapping configuration, and Routing ID in a BAP layer data packet header. The routing configuration contains a mapping relationship between the Routing ID and an address of a next-hop node. The downlink RLC channel mapping configuration contains a mapping relationship among a target IP address, a Differentiated Services Code Point (DSCP), an address of a next-hop node and an egress link RLC channel ID.

For each downlink data packet that reaches the IAB-donor DU, the IAB-donor DU may find an address of a next-hop node from a routing configuration according to Routing ID in a data packet header. In this way, after the address of the next-hop node is determined, an egress link RLC channel ID is found from the downlink RLC channel mapping configuration according to an IP address of a data packet, and the DSCP.

The above text schematically describes routing of an IAB system, the following text describes updating of a network topology of the IAB system. Rel-16 NR has standardized a process of updating network topology when an IAB-node moves under the same donor-CU.

FIG. 8 is a schematic diagram of intra-CU path migration (also called topology adaptation). When an IAB-node changes a parent node (changing from IAB-node 1 to IAB-node 2), the donor-CU configures a configuration related to path migration for the IAB-node by using an RRC reconfiguration message, so that the IAB-node performs migration of an F1 transmission path.

A configuration related to network topology update includes updating a default BH RLC channel of uplink F1-C, F1-U and non-F1 data, updating a default BAP routing ID, and updating an IP address routed to a Donor-DU. When the IAB-node is accessed to a new parent node, the IAB-node starts to apply the configuration related to path migration. For a child node of the IAB-node, the configuration related to network topology update is carried out also using the same method.

The inventor finds that path migration of an uplink service of a migrating node and path migration of an uplink service of a child node are carried out after the migrating node completes random access to a target parent node, which will result in a longer transmission delay and service interruption time.

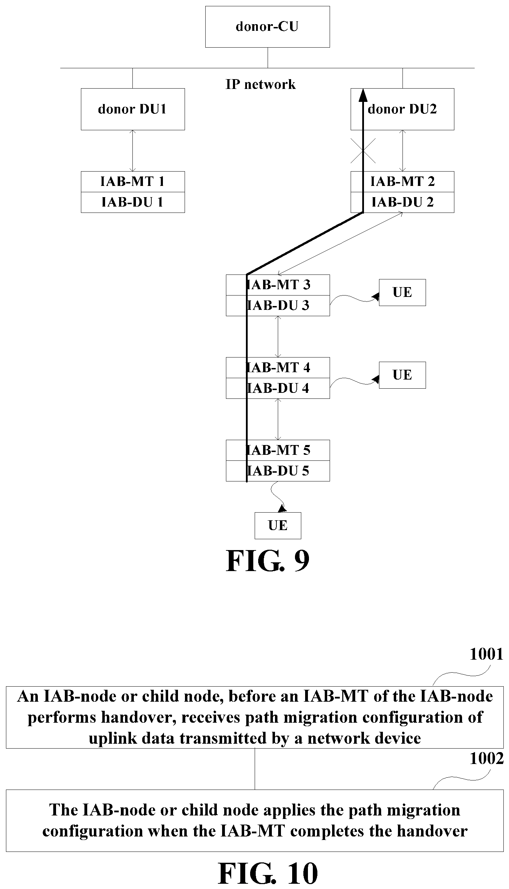

FIG. 9 is a schematic diagram of path migration in the embodiments of the present disclosure. As shown in FIG. 9, if a transmission path after the IAB-node is handover changes a donor-DU (from donor-DU 1 to donor-DU 2), uplink data generated by F1-U of the IAB-node and its child node based on the original path configuration cannot be transmitted to a CU, this is because the uplink data generated according to the original path configuration carries a BAP address of a source donor-DU, which is different from a BAP address of a target donor-DU, such uplink data will be discarded by the target donor-DU. In addition, if the target donor-DU has an IP address filtering function, uplink data containing an IP address assigned by the source donor-DU will be also discarded. The discarded uplink data will be retransmitted by a UE, resulting in a longer transmission delay and service interruption time.

For at least one of the above or similar problems, an IAB-node or child node in the embodiments of the present disclosure, before the IAB-node performs handover, receives path migration configuration of uplink data transmitted by a network device, which will be described below in detail. In the embodiments of the present disclosure, unless otherwise specified, the migrating node is an IAB-node, an IAB-node device includes the IAB-node or its child node.

### Embodiments of a first aspect

The embodiments of the present disclosure provide a path migration method, which is described from an IAB-node or child node side. A parent node of the IAB-node before migration uses a first donor distribution unit (source donor-DU) and a parent node of the IAB-node after migration uses a second donor distribution unit (target donor-DU), which may also be referred to as migration of the IAB-node from the first donor-DU to the second donor-DU. In some scenarios, before the IAB-node is migrated, the first donor-DU is used, and the second donor-DU is used after the IAB-node is migrated, i.e., a parent node of the IAB-node is the first donor-DU or the second donor-DU.

FIG. 10 is a schematic diagram of a path migration method in the embodiments of the present disclosure. As shown in FIG. 10, the method includes:
1001, an IAB-node or child node, before an IAB-MT of the IAB-node performs handover, receives path migration configuration of uplink data transmitted by a network device; and
1002, the IAB-node or child node applies the path migration configuration when the IAB-MT completes the handover.

It should be noted that the above FIG. 10 is only schematic description of the embodiments of the present disclosure, but the present disclosure is not limited to this. For example, an execution order of each operation may be adjusted appropriately, moreover other some operations may be increased or reduced. Persons skilled in the art may make appropriate modifications according to the above contents, not limited to the records in the above FIG. 10.

For example, a donor-CU, before an IAB-MT of a migrating node performs handover, configures path migration parameters for uplink F1 and non-F1 service of the migrating node and uplink F1 and non-F1 service of a child node; the migrating node or the child node immediately applies these path migration parameters when the IAB-MT completes the handover, thereby uplink data loss and service interruption may be avoided.

The embodiments of the present disclosure are further described below by using transmission of uplink data in different scenarios.

In some embodiments, a first donor distribution unit (donor-DU) and a second donor distribution unit belong to the same donor centralized unit (donor-CU), and the path migration configuration is transmitted by the donor-CU to an IAB-node or a child node via an F1AP message or a radio resource control (RRC) message.

In some embodiments, a migrating node has a routing ID rewrite function.

The path migration configuration includes: adding inter-donor distribution unit routing identifier rewriting configuration used for indicating a mapping relationship between a first routing identifier and a second routing identifier, adding routing configuration containing a mapping relationship between the second routing identifier and a BAP address of a next-hop node of the IAB-node, and adding RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier; wherein a destination BAP address of the first routing identifier is a BAP address of the first donor-DU, and a destination BAP address of the second routing identifier is a BAP address of the second donor-DU.

For example, a network device transmitting path migration configuration is a donor-CU. The inter-donor distribution unit routing identifier rewriting configuration used for indicating a mapping relationship between a first routing identifier and a second routing identifier specifically is mapping relationship information between a routing ID before rewriting and a routing ID after rewriting (inter-donor-DU rewriting information); the routing configuration containing a mapping relationship between the second routing identifier and a BAP address of a next-hop node of the IAB-node specifically is routing information; the RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier specifically is RLC channel mapping information.

For example, the donor-CU configures these three pieces of information i.e., the mapping relationship information between a routing ID before rewriting and a routing ID after rewriting (inter-donor-DU rewriting information), the routing information and the RLC channel mapping information, to the migrating node before the IAB-MT of the migrating node performs the handover. These three pieces of information may be configured together to the IAB-node via the same message, or may be respectively configured to the IAB-node via two or more messages, the present disclosure is not limited to this.

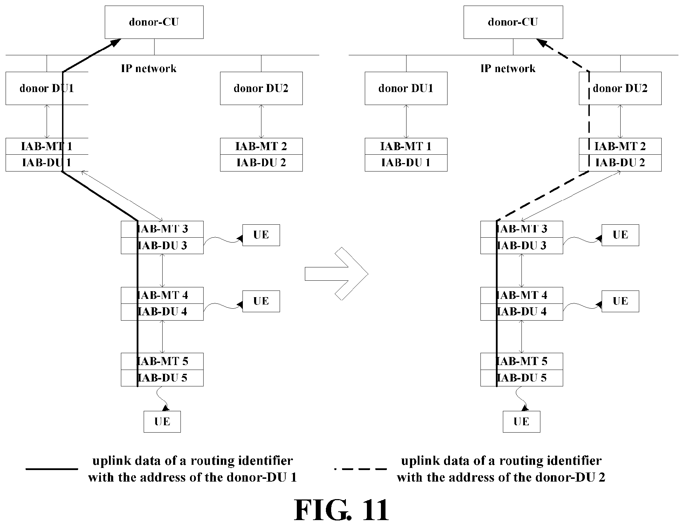

FIG. 11 is an example graph of path migration in the embodiments of the present disclosure. As shown in FIG. 11, the IAB-node 3 (including IAB-MT 3 and IAB-DU 3) is a migrating node, whose transmission path is migrated from the donor-DU 1 to the donor-DU 2. After the IAB-MT 3 of the IAB-node 3 completes handover, a routing ID of a service in the IAB-node 3 and its child node (such as the IAB-node 4 and the IAB-node 5 etc. shown in the figure) may remain unchanged, as shown by the solid line on the right part.

In some embodiments, since the IAB-node has received inter-donor distribution unit routing identifier rewriting configuration (such as inter-donor-DU rewriting information) transmitted by a network device, the IAB-node may rewrite a first routing ID carried in a BAP header of uplink data to a second routing ID.

For example, as shown by the dotted line on the right part in FIG. 11, the IAB-node 3 needs to replace the original routing ID of its uplink service and the original routing ID of uplink service of a child node (such as the IAB-node 4 and the IAB-node 5 shown in the figure) with new routing IDs. The destination BAP address of the original routing ID is a source donor-DU, and after replacement, the destination BAP address of the new routing ID is a target donor-DU.

For another example, after the original routing ID is replaced with the new routing ID, routing selection and BH RLC channel selection may be performed according to the new routing ID, the donor-CU updates routing configuration in the migrating node (because the original routing table does not contain routing available for the new routing ID) and an RLC channel mapping table.

In the embodiments of the present disclosure, the new routing ID may also be called a destination routing ID, or a replaced (rewritten) routing ID, these terms are interchangeable. The original routing ID may also be called a source routing ID or an old routing ID, or a routing ID before replacement (before rewriting), these terms are interchangeable.

The migrating node may apply the inter-donor-DU rewriting information, the new routing table and the RLC channel mapping table when completing the handover or receiving the configuration. The donor-CU may indicate the migrating node to cache the path migration configuration first, and apply the path migration configuration when the IAB-MT completes the handover.

The above text describes the cases of routing IDs, and the following text describes the cases of IP addresses.

In some embodiments, an IAB-node receives first configuration information transmitted by a donor-CU before performing handover, the first configuration information being used for configuring replacing an IP address anchored to the first donor-DU with an IP address anchored to the second donor-DU; wherein the IP addresses are used for F1 user plane data, F1 control plane data or non-F 1 data of the IAB-node.

For example, if a target donor-DU has a source IP address filtering function, i.e., uplink data containing an IP address assigned by other donor-DU will be discarded, the migrating node further needs to change an IP address carried by uplink service to an IP address assigned by the target donor-DU. Thus, the donor-CU configures the IP address assigned by the target donor-DU to the migrating node before the migrating node performs handover.

In the embodiments of the present disclosure, "IP address anchored to IAB donor-DU" may be understood as "an IP address assigned by the donor-DU" or "Transport Network Layer (TNL) address(es) that is (are) routable via the IAB-donor-DU", the terms are interchangeable, the present disclosure is not limited to this.

When the migrating node has a routing ID rewrite function, a routing ID of a service (including uplink and downlink services) may remain unchanged in the migrating node and its child node, but an IP address anchored to the first donor-DU needs to be replaced with an IP address anchored to the second donor-DU. The IAB-node selects a used IP address according to the first donor-DU, thus configuring of an IP address of a service needs to direct at a BAP address of the first donor-DU, including adding an IP address anchored to the second donor-DU and releasing an IP address anchored to the first donor-DU.

In some embodiments, the first configuration information is IP address configuration information for the BAP address of the first donor-DU. For example, the first configuration information is used to change the IP address anchored to the first donor-DU for the BAP address of the first donor-DU to the IP address anchored to the second donor-DU.

In some embodiments, the IAB-node replaces the IP address anchored to the first donor-DU with the IP address anchored to the second donor-DU when the IAB-node completes random access of the handover.

For example, the migrating node needs to immediately apply the IP address assigned by the target donor-DU after completing the handover. For another example, the above "replace" may further be understood as "adding the IP address anchored to the second donor-DU and releasing the IP address anchored to the first donor-DU".

In some embodiments, a child node or a parent node of the child node receives first configuration information transmitted by a donor-CU before the IAB-node performs handover, the first configuration information being used for configuring replacing an IP address anchored to the first donor-DU with an IP address anchored to the second donor-DU; wherein the IP addresses are used for F1 user plane data, F1 control plane data or non-F1 data of the child node.

For example, the child node needs to change an IP address carried by uplink F1 and non-F1 data (such as OAM data) to an IP address assigned by the target donor-DU. Thus, the donor-CU needs to configure the IP address assigned by the target donor-DU of F1 and non-F1 data to the child node or the parent node of the child node before the migrating node performs the handover.

In some embodiments, the child node replaces the IP address anchored to the first donor-DU with the IP address anchored to the second donor-DU when the IAB-node completes random access of the handover.

For example, the child node needs to immediately apply the IP address assigned by the target donor-DU when the migrating node completes the handover. For another example, the above "replace" may further be understood as "adding the IP address anchored to the second donor-DU and releasing the IP address anchored to the first donor-DU".

In some embodiments, the first configuration information is transmitted by a donor centralized unit to the IAB-node via a handover command radio resource control (RRC) message or an RRC reconfiguration message. The first configuration information is transmitted by a donor centralized unit to a child node or a parent node of the child node via an RRC reconfiguration message.

In some embodiments, in order to enable a child node to immediately apply the IP address after the migrating node completes the handover, the migrating node may transmit an indication to the child node when completing the handover, so that the child node applies the IP address configuration. Or, the parent node of the child node caches the IP address configured for the child node before the handover is completed, and transmit the IP address to the child node when the migrating node completes the handover.

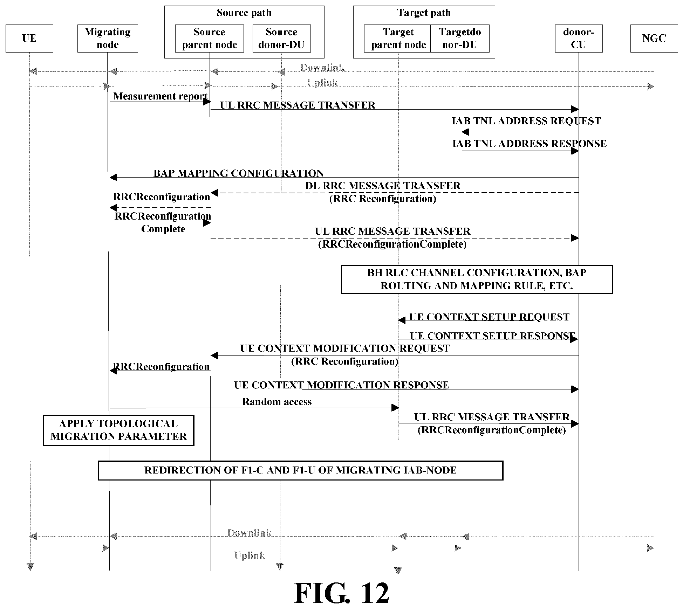

FIG. 12 is a signaling flow graph of path migration in the embodiments of the present disclosure, and exemplarily shows an example of a signaling flow when an IAB-node performs path migration between different donor-DUs of the same donor-CU.

As shown in FIG. 12, before handover preparation, the donor-CU initiates path migration for a migrating node.
- The migrating node transmits a measurement report to the donor-CU, and triggers the donor-CU to initiate path migration.
- The donor-CU configures for uplink services of the migrating node and its child node and replaces the destination BAP address of the original routing ID with a new routing ID of the target donor-DU. The donor-CU requests the target donor-DU an IP address used for an F1 service or a non-F1 service of the migrating node and an IP address used for an F1 service or a non-F 1 service of its child node.
- The donor-CU generates inter-donor-DU rewriting information according to the original routing ID and a replaced new routing ID, and generates routing information for the replaced new routing ID, and configures an egress link BH RLC channel identifier from the migrating node to a target parent node according to Qos of an uplink service.
- The donor CU transmits the following configuration information to the migrating node by using an F1AP message (such as BAP MAPPING CONFIGURATION): inter-donor-DU rewriting information, routing information for the replaced new routing ID, an egress link BH RLC channel identifier from the migrating node to a target parent node.
- The donor-CU transmits an RRC reconfiguration message (containing an IP address used for an F1 service or a non-F1 service as assigned by the target donor-DU) to the migrating node, or the IP address assigned by the target donor-DU is configured to the migrating node via a handover command RRC message.
- The donor-CU transmits an RRC reconfiguration message (containing IP addresses used for an F1 service and a non-F1 service as assigned by the target donor-DU) to a child node.
- The donor-CU updates routing information and RLC channel mapping information for a node on a target path.
- The donor-CU initiates handover for the migrating node.
- When the migrating node completes the handover, the migrating node applies the configured IP address used for an F1 service or a non-F1 service.
- When the migrating node completes the handover, the child node applies the configured IP addresses used for an F1 service and a non-F1 service.

The above signaling process only schematically describes the embodiments of the present disclosure, but the present disclosure is not limited to this. For more specific contents about signaling, relevant technologies may be further referred to.

The cases in which the migrating node has a routing ID rewrite function are schematically described above, the following text describes the cases in which the migrating node does not have a routing ID rewrite function.

In some embodiments, the migrating node does not have a routing ID rewrite function, or the migrating node is not configured with inter-donor-DU rewriting information.

The path migration configuration includes: adding routing configuration containing a mapping relationship between a second routing identifier and a BAP address of a next-hop node of the IAB-node, and adding RCL channel mapping configuration used for indicating a mapping relationship between a BAP address of a prior-hop node of the IAB-node, an ingress link RLC channel identifier, the BAP of the next-hop node of the IAB-node and an egress link RLC channel identifier; wherein a destination BAP address of the second routing identifier is a BAP address of the second donor-DU.

For example, a network device transmitting path migration configuration is the donor-CU. The routing configuration containing a mapping relationship between the second routing identifier and a BAP address of a next-hop node of the IAB-node specifically is routing information; the RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier specifically is RLC channel mapping information.

For example, the donor-CU configures these two pieces of information i.e., the routing information and the RLC channel mapping information, to the migrating node before the IAB-MT of the migrating node performs the handover. These two pieces of information may be configured together to the IAB-node via the same message, or may be respectively configured to the IAB-node via two or more messages, the present disclosure is not limited to this.

In some embodiments, before the IAB-node performs handover, the IAB-node receives second configuration information used for configuring a second routing identifier transmitted by the donor-CU; wherein the second routing identifier is used for uplink F1 user plane data, F1 control plane data or non-F 1 data of the IAB-node.

In some embodiments, before the IAB-node performs handover, a child node or a parent node of the child node receives second configuration information used for configuring a second routing identifier transmitted by the donor-CU; wherein the second routing identifier is used for uplink F1 user plane data, F1 control plane data or non-F1 data of the child node.

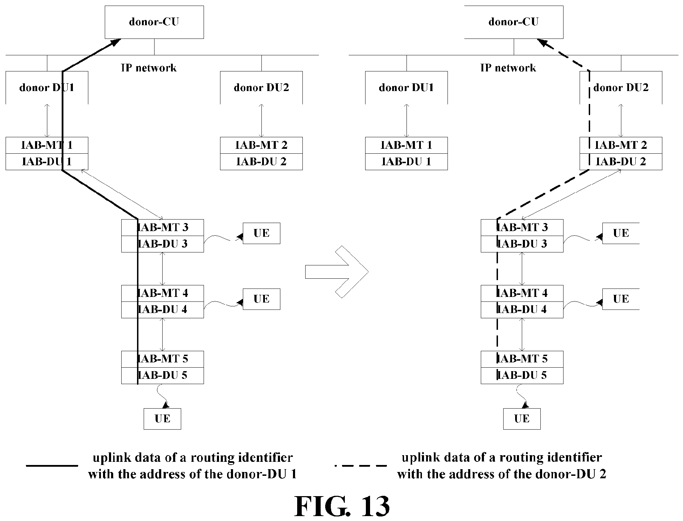

FIG. 13 is another example graph of path migration in the embodiments of the present disclosure. As shown in FIG. 13, the IAB-node 3 (including IAB-MT 3 and IAB-DU 3) is a migrating node, whose transmission path is migrated from the donor-DU 1 to the donor-DU 2. After the IAB-MT 3 of the IAB-node 3 completes handover, routing IDs of a service in the IAB-node 3 and its child node (such as the IAB-node 4 and the IAB-node 5 etc. shown in the figure) need to be updated, as shown by the dotted line on the right part.

For example, the IAB-node 3 needs to update routing IDs of uplink F1 and non-F1 services, and the child nodes (IAB-node 4 and IAB-node 5, etc. as shown in FIG. 13) need to update routing IDs of uplink F1 and non-F1. Thus, the donor-CU needs to configure target routing IDs of uplink F1 and non-F1 services of the migrating node and target routing IDs of uplink F1 and non-F1 of the child nodes to the migrating node and the child nodes respectively before the migrating node performs the handover.

In some embodiments, an IAB-node applies a second routing identifier when the IAB-node completes random access of the handover. A child node applies the second routing identifier when the IAB-node completes random access of the handover. For example, the migrating node and the child node need to immediately apply the configured target routing ID when the migrating node completes the handover.

For another example, after updating a routing ID of uplink data, the IAB-node performs routing selection and backhaul RLC channel selection according to the target routing ID, the donor-CU updates routing information and RLC channel mapping information in the migrating node and the child node, and configures the migrating node and the child node before the migrating node performs the handover (because original routing information does not contain routing available for the target routing ID).

The migrating node and the child node may immediately apply new routing information and/or RLC channel mapping information when completing the handover or receiving the configuration. The donor-CU may indicate the migrating node and the child node to cache the path migration configuration, and apply the path migration configuration when the handover is completed.

The above text describes the cases of routing IDs, and the following text describes the cases of IP addresses.

In some embodiments, an IAB-node receives third configuration information transmitted by a donor-CU before an IAB-MT performs handover, the third configuration information being used for configuring an IP address anchored to a second Donor-DU.

For example, if a target donor-DU has a source IP address filtering function, the migrating node needs to change an IP address carried by uplink service to an IP address assigned by the target Donor-DU. Thus, the donor-CU needs to configure the IP address assigned by the target donor-DU to the migrating node before the migrating node performs handover. The migrating node needs to apply the IP address assigned by the target donor-DU after completing the handover or receiving the configuration.

In some embodiments, the third configuration information includes: configuration information used for adding an IP address anchored to a second donor-DU for a BAP address of the second donor-DU.

In some embodiments, a child node receives third configuration information transmitted by a donor-CU before an IAB-MT performs handover, the third configuration information being used for configuring an IP address anchored to a second donor-DU.

For example, the child node needs to change an IP address carried by uplink F1 and non-F1 data (such as OAM data) to an IP address assigned by the target donor-DU. Thus, the donor-CU needs to configure the IP address assigned by the target donor-DU to the child node before the migrating node performs handover. The child node needs to apply the IP address assigned by the target donor-DU after the migrating node completes the handover or receives the configuration.

In some embodiments, the third configuration information of the IAB-node is transmitted by a donor centralized unit via a handover command radio resource control (RRC) message or an RRC reconfiguration message. Third configuration information of a child node is transmitted by a donor centralized unit via an RRC reconfiguration message.

The above text schematically describes the cases for the same CU, and the following text describes the cases for different CUs.

In some embodiments, the first donor-DU belongs to a first donor centralized unit, and the second donor-DU belongs to a second donor centralized unit; the path migration configuration is transmitted by the first donor centralized unit to an IAB-node or a child node via an F1AP message or an RRC message; wherein, an IAB-DU of the IAB-node maintains F1 connection with the first donor centralized unit.

In some embodiments, the path migration configuration includes: adding inter-donor centralized unit routing identifier rewriting configuration used for indicating a mapping relationship between a first routing identifier and a second routing identifier, adding routing configuration containing a mapping relationship between the second routing identifier and a BAP address of a next-hop node of the IAB-node, and adding RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
wherein the first routing identifier and the BAP address of the prior-hop node of the IAB-node belong to a network topological domain of the first donor centralized unit, a destination BAP address of the first routing identifier is a BAP address of the first donor-DU, the second routing identifier and the BAP address of the next-hop node of the IAB-node belong to a network topological domain of the second donor centralized unit, and a destination BAP address of the second routing identifier is a BAP address of the second donor-DU.

For example, after the migrating node handover from a parent node under the source donor-CU to a parent node under the target donor-CU, only the RRC connection is handover to the target donor-CU, the F1 interface still belongs to the source donor-CU, and the RRC connections of a child node and a UE it serves still belong to the source donor-CU, at this case, the migrating node is also called a boundary node.

A routing ID of F 1 or non-F1 data of the boundary node and a routing ID of F 1 or non-F1 data of the child node may remain unchanged, but the boundary node needs to replace an original routing ID of an uplink service with a target routing ID.

The original routing ID belongs to a topological domain of the source donor-CU and its destination BAP address is the source donor-DU, a new routing ID after replacement belongs to a topological domain of the target donor-CU and its destination BAP address is the target donor-DU. Therefore, a network device needs to configure mapping relationship information (BAP Header Rewriting information) between the original routing ID and the new routing ID to the boundary node before the boundary node performs handover.

For another example, when forwarding uplink data, the boundary node replaces the original routing ID with the new routing ID. Since the new routing ID belongs to the topological domain of the target donor-CU, the boundary node needs to perform routing selection according to the new routing ID and the routing information of the topological domain of the target donor-CU. Therefore, the network device needs to configure for the boundary node the routing information of which a next-hop BAP address of an egress link belongs to the topological domain of the target donor-CU (the next-hop BAP address of the egress link in the original routing information belongs to the topological domain of the original donor-CU).

For another example, a BAP address of a prior-hop node of the boundary node belongs to the topological domain of the source donor-CU, and a BAP address of a next-hop node belongs to the topological domain of the target donor-CU, thus the network device needs to update the RLC channel mapping information in the boundary node (both the address of the prior-hop node and the address of the next-hop node in the original RCL channel mapping information belong to the topological domain of the original donor-CU).

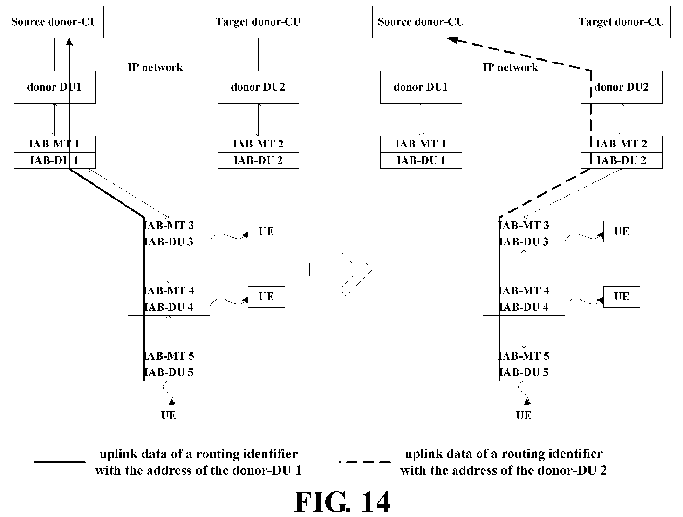

FIG. 14 is another example graph of path migration in the embodiments of the present disclosure. As shown in FIG. 14, the IAB-node 3 (including IAB-MT 3 and IAB-DU 3) is a migrating node, whose transmission path is migrated from the donor-DU 1 of the source donor-CU to the donor-DU 2 of the target donor-CU. After the IAB-MT 3 of the IAB-node 3 completes handover, routing IDs of an uplink service of the IAB-node 3 and an uplink service of its child node (such as the IAB-node 4 and the IAB-node 5 etc. shown in the figure) may remain unchanged, as shown by the solid line on the right part.

In some embodiments, since the IAB-node has received mapping relationship information (inter-donor-CU rewriting information) transmitted by a network device, the IAB-node may rewrite a first routing ID carried in a BAP header of uplink data to a second routing ID.

For example, as shown by the dotted line on the right part in FIG. 14, the IAB-node 3 needs to replace the original routing ID of its uplink service and the original routing ID of uplink service of a child node (such as the IAB-node 4 and the IAB-node 5 shown in the figure) with new routing IDs. The destination BAP address of the original routing ID is the donor-DU 1 of the source donor-CU, and after replacement, the destination BAP address of the new routing ID is the donor-DU 2 of the target donor-CU.

For another example, after the original routing ID is replaced with the new routing ID, routing selection and backhaul RLC channel selection may be performed according to the new routing ID, the donor-CU needs to update routing information (because the original routing information does not contain routing available for the target routing ID) and RLC channel mapping information in the migrating node.

The migrating node may apply the inter-donor-CU rewriting information, the new routing information and the RLC channel mapping information when completing the handover or receiving the configuration. The donor-CU may indicate the migrating node to cache the path migration configuration first, and apply the path migration configuration when the IAB-MT completes the handover.

The above text describes the cases of routing IDs, and the following text describes the cases of IP addresses.

In some embodiments, an IAB-node receives first configuration information transmitted by a first donor-CU before performing handover, the first configuration information being used for configuring replacing an IP address anchored to the first donor-DU with an IP address anchored to the second donor-DU; wherein the IP addresses are used for F1 user plane data, F1 control plane data or non-F 1 data of the IAB-node.

For example, if a target donor-DU has a source IP address filtering function, i.e., uplink data containing an IP address assigned by other donor-DU will be discarded, the migrating node needs to change an IP address carried by uplink data to an IP address assigned by the target donor-DU. Thus, the donor-CU configures the IP address assigned by the target donor-DU to the migrating node before the migrating node performs handover.

In the embodiments of the present disclosure, "IP address anchored to IAB donor-DU" may be understood as "an IP address assigned by the donor-DU" or "Transport Network Layer (TNL) address(es) that is (are) routable via the IAB-donor-DU", the terms are interchangeable, the present disclosure is not limited to this.

A routing ID of a service (including uplink and downlink services) may remain unchanged in the migrating node and its child node, but an IP address anchored to the first Donor-DU needs to be replaced with an IP address anchored to the second Donor-DU. The IAB-node selects a used IP address according to the first Donor-DU, thus configuring an IP address of a service needs to direct at a BAP address of the first Donor-DU, including adding an IP address anchored to the second donor-DU and releasing an IP address anchored to the first donor-DU.

In some embodiments, the first configuration information is IP address configuration information for the BAP address of the first donor-DU. For example, the first configuration information is used to change the IP address anchored to the first donor-DU for the BAP address of the first donor-DU to the IP address anchored to the second donor-DU.

In some embodiments, the IAB-node replaces the IP address anchored to the first donor-DU with the IP address anchored to the second donor-DU when the IAB-node completes random access of the handover.

For example, the migrating node needs to immediately apply the IP address assigned by the target donor-DU after completing the handover. For another example, the above "replace" may further be understood as "adding the IP address anchored to the second donor-DU and releasing the IP address anchored to the first donor-DU".

In some embodiments, a child node or a parent node of the child node receives first configuration information transmitted by a first donor-CU before the IAB-node performs handover, the first configuration information being used for configuring replacing an IP address anchored to the first donor-DU with an IP address anchored to the second donor-DU; wherein the IP addresses are used for F1 user plane data, F1 control plane data or non-F1 data of the child node.

For example, the child node needs to change an IP address carried by uplink F1 and non-F1 data (such as OAM data) to an IP address assigned by the target donor-DU. Thus, the donor-CU needs to configure the IP address assigned by the target donor-DU of F1 and non-F1 data to the child node or the parent node of the child node before the migrating node performs the handover.

In some embodiments, the child node replaces the IP address anchored to the first donor-DU with the IP address anchored to the second donor-DU when the IAB-node completes random access of the handover.

For example, the child node needs to immediately apply the IP address assigned by the target donor-DU when the migrating node completes the handover. For another example, the above "replace" may further be understood as "adding the IP address anchored to the second donor-DU and releasing the IP address anchored to the first donor-DU".

In some embodiments, the first configuration information is transmitted by a donor centralized unit to the IAB-node via a handover command radio resource control (RRC) message or an RRC reconfiguration message. The first configuration information is transmitted by a donor centralized unit to a child node or a parent node of the child node via an RRC reconfiguration message.

In some embodiments, in order to enable a child node to immediately apply the IP address after the migrating node completes the handover, the migrating node may transmit an indication to the child node when completing the handover, so that the child node applies the IP address configuration. Or, the parent node of the child node caches the IP address configured for the child node before the handover is completed, and transmit the IP address to the child node when the migrating node completes the handover.

It is worth noting that in some other embodiments, the IAB-node or child node may further receive the first configuration information after the IAB-MT performs handover, and the embodiments of the present disclosure do not limit a case in which the first configuration information is received before or after the IAB-node performs the handover.

In addition, the method for the IAB-node or child node to receive the first configuration information may further be applied to a scenario in which when the IAB-MT of the IAB-node maintains dual connection with the first donor-CU and the second donor-CU, a transmission path of some services is migrated to the network topological domain of the second donor-CU, and a scenario in which when the IAB-MT of the IAB-node is re-established to the second donor-CU, a transmission path of all services is migrated to the network topological domain of the second donor-CU. A parent node before service path migration uses the first donor-DU and a parent node after the migration uses the second donor-DU, the first configuration information is used to configure replacing an IP address anchored to the first donor-DU with an IP address anchored to the second donor-DU, for a migrated service.

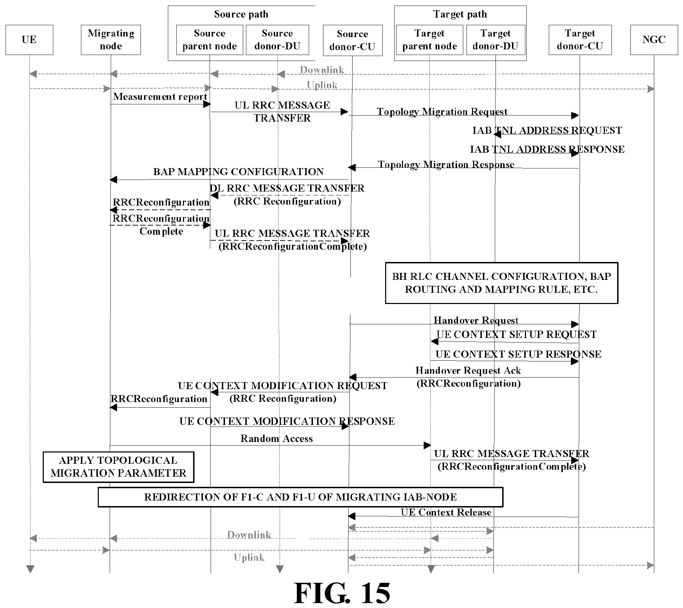

FIG. 15 is another signaling flow graph of path migration in the embodiments of the present disclosure, and exemplarily shows an example of a signaling flow when an IAB-node performs path migration between different donor-CUs.

As shown in FIG. 15, before handover preparation, the source donor-CU initiates path migration for a migrating node.
- The migrating node transmits a measurement report to the source donor-CU, and triggers the source donor-CU to initiate path migration.
- The source donor-CU transmits a path migration request Xn message to the target donor-CU.

The path migration request includes:
-- For each uplink service flow that needs to be migrated, of the migrating node, including: QoS information, a routing ID used in a topological domain of the source donor-CU (routing ID before being replaced by the migrating node), an ingress link BH RLC channel identifier used for the migrating node.
-- For each uplink service flow that needs to be migrated, of the child node, including: QoS information, a routing ID used in a topological domain of the source donor-CU (routing ID before being replaced by the migrating node), an ingress link BH RLC channel identifier used for the migrating node.
-- For the migrating nodes: requesting to assign IP addresses for F1 and non-F1 services, the source donor-CU may indicate the target donor-CU to include an IP address assigned for a service of the migrating node in a handover command RRC message of the migrating node.
-- For the child node: requesting to assign IP addresses for F1 and non-F1 services.
   - The target donor-CU configure, for uplink services of the migrating node and the child node, target routing IDs in the topological domain of the target donor-CU, and an egress link BH RLC channel identifier from the migrating node to a target parent node. The target donor-CU requests the target donor-DU an IP address used for a service of the migrating node and an IP address used for a service of its child node.
   - The target donor-CU transmits a path migration response Xn message to the source donor-CU. It includes:
-- For each uplink service flow of the migrating node, including: a target routing ID (replaced routing ID) used in topological domain of the target donor-CU, and an egress link BH RLC channel identifier used for the migrating node.
-- For each uplink service flow of the child node, including: a target routing ID (routing ID after replacement) used in topological domain of the target donor-CU, and an egress link BH RLC channel identifier used for the migrating node.
-- Routing information of a target donor-CU domain, including a next-hop BAP address corresponding to the replaced target routing ID.
-- For the migrating node, including: an IP address assigned by the target donor-DU (included in an RRC reconfiguration message); wherein an IP address for a service of the migrating node may not be included in the path migration response Xn message, but in a subsequent Handover Request Ack message.
-- For the child node, including: an IP address assigned by the target donor-DU (included in an RRC message).

- The source donor-CU generates BAP Header Rewriting information, routing information of the target donor-CU domain, and RLC channel mapping information in which an address of a prior-hop node belongs to the topological domain of the source donor-CU and an address of a next-hop node belongs to the topological domain of the target donor-CU, according to the path migration response message.

The following information are transmitted to the migrating node by using an F1AP message (such as BAP MAPPING CONFIGURATION): the BAP Header Rewriting Information, the routing information of the target donor-CU domain, and the RLC channel mapping information in which an address of a prior-hop node belongs to the topological domain of the source donor-CU and an address of a next-hop node belongs to the topological domain of the target donor-CU.
- The source donor-CU transmits an RRC reconfiguration message (containing IP addresses used for an Fl service and a non-F1 service as assigned by the target donor-DU) to the migrating node.
- The source donor-CU transmits an RRC reconfiguration message (containing IP addresses used for an F1 service and a non-F1 service as assigned by the target donor-DU) to the child node.
- The target donor-CU updates routing information and RLC channel mapping information for one or more nodes on a target path.
- The source donor-CU initiates handover preparation for the migrating node.
- When the migrating node completes the handover, the migrating node applies the configured IP addresses used for the F1 service and the non-F1 service.
- When the migrating node completes the handover, the child node applies the configured IP addresses used for the F1 service and the non-F1 service.
- The target donor-CU transmits a context release request to the source donor-CU for the IAB-MT of the migrating node.

The above signaling process only schematically describes the embodiments of the present disclosure, but the present disclosure is not limited to this. For more specific contents about signaling, relevant technologies may be further referred to.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, before an IAB-MT of an IAB-node performs handover, the IAB-node or a child node receives path migration configuration of uplink data transmitted by a network device, and the IAB-node or the child node applies the path migration configuration when the IAB-MT completes the handover. Thereby, the problem that uplink data is discarded can be reduced or avoided, a transmission delay and service interruption time is reduced.

### Embodiments of a second aspect

The embodiments of the present disclosure provide a path migration method, which is described from a donor centralized unit side. The contents same as the embodiments of the first aspect are not repeated.

In some embodiments, a parent node of an IAB-node before migration uses a first donor distribution unit (donor-DU) and a parent node of the IAB-node after the migration uses a second donor distribution unit, the first donor-DU belonging to a first donor centralized unit, and the second donor-DU belonging to a second donor centralized unit;
the first donor centralized unit (donor-CU) transmits a path migration request message to the second donor-CU before transmitting a handover request for an IAB-MT of the IAB-node; and
the first donor-CU receives a path migration response message transmitted by the second donor-CU.

In some embodiments, the path migration request message and the path migration response message are transmitted via an Xn interface, and the path migration request message and the path migration response message contain an XnAP identifier of the IAB-node.

Since the first donor-CU transmits a path migration request message to the second donor-CU before transmitting a handover request for the IAB-MT of the IAB-node, in some embodiments, the path migration request message contains a target cell identifier or a target parent node identifier for handover of the IAB-MT of the IAB-node.

In some embodiments, the path migration request message contains an IP address anchored to the first donor-DU for a BAP address of the first donor-DU, the IP address being used for F1 user plane data, F1 control plane data or non-F1 data of the IAB-node or a child node.

In some embodiments, a path migration response message contains the first configuration information, the first configuration information being used for configuring replacing an IP address anchored to the first donor-DU with an IP address anchored to the second donor-DU.

In some embodiments, the first configuration information is contained in an RRC reconfiguration message contained in the path migration response message for the IAB-node or child node.

In some embodiments, the first donor centralized unit transmits the first configuration information to the IAB-node, or to the child node or a parent node of the child node, before transmitting a handover command RRC message to the IAB-node.

In some embodiments, the first donor centralized unit (donor-CU) transmits path migration configuration of uplink data to the IAB-node, or to the child node or a parent node of the child node, before transmitting a handover command RRC message to the IAB-node.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

As can be known from the above embodiments, before an IAB-MT of an IAB-node performs handover, the IAB-node or a child node receives path migration configuration of uplink data transmitted by a network device, and the IAB-node or the child node applies the path migration configuration when the IAB-MT completes the handover. Thereby, the problem that uplink data is discarded can be reduced or avoided, a transmission delay and service interruption time is reduced.

It is worth noting that in some other embodiments, the first donor centralized unit (donor-CU) may further transmit a path migration request message to the second donor-CU after transmitting a handover request for the IAB-MT of the IAB-node. The embodiments of the present disclosure have no limitation on transmitting the first configuration information to the IAB-node or child node before transmitting the handover command RRC message to the IAB-node.

In addition, the method for transmitting the first configuration information may be used in a scenario in which when the IAB-node maintains dual connection with the first donor-CU and the second donor-CU, a transmission path of some services is migrated to the network topological domain of the second donor-CU, and a scenario in which when the IAB-MT of the IAB-node is re-established to the second donor-CU, a transmission path of all services is migrated to the network topological domain of the second donor-CU. A parent node before service path migration uses the first donor-DU and a parent node after the migration uses the second donor-DU, the first configuration information is used to configure replacing an IP address anchored to the first donor-DU with an IP address anchored to the second donor-DU, for a migrated service.

### Embodiments of a third aspect

The embodiments of the present disclosure provide an IAB-node device, the contents same as the embodiments of the first and second aspects are not repeated. The device e.g. may be an IAB-node or child node in an IAB system, or may be a component or component(s) or assemblies or modules configured in the IAB-node or child node. A parent node of the IAB-node device before migration uses a first donor distribution unit (donor-DU) and a parent node of the IAB-node after the migration uses a second donor distribution unit.

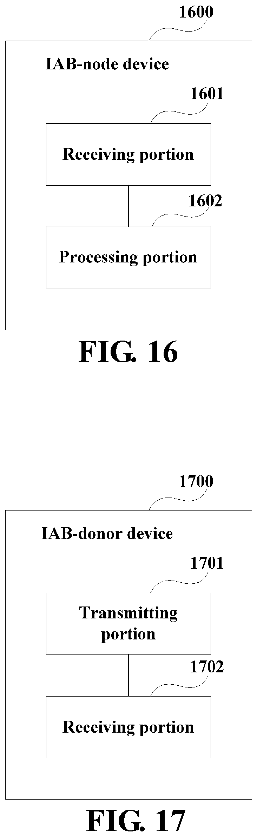

FIG. 16 is a schematic diagram of an IAB-node device in the embodiments of the present disclosure. As shown in FIG. 16, the IAB-node device 1600 includes: a receiving portion 1601 and a processing portion 1602.

In some embodiments, before an IAB-MT of an IAB-node performs handover, the receiving portion 1601 receives path migration configuration of uplink data transmitted by a network device, and the processing portion 1602 applies the path migration configuration when the IAB-MT completes the handover.

In some embodiments, a first donor distribution unit (donor-DU) and a second donor distribution unit belong to the same donor centralized unit (donor-CU), and the path migration configuration is transmitted by the donor centralized unit to an IAB-node or a child node via an F1AP message or an RRC message.

In some embodiments, a path migration configuration includes: adding inter-donor distribution unit routing identifier rewriting configuration used for indicating a mapping relationship between a first routing identifier and a second routing identifier, adding routing configuration containing a mapping relationship between the second routing identifier and a BAP address of a next-hop node of the IAB-node, and adding RCL channel mapping configuration used for indicating a mapping relationship between a BAP address of a prior-hop node of the IAB-node, an ingress link radio link control (RLC) channel identifier, the BAP of the next-hop node of the IAB-node and an egress link RLC channel identifier; a destination BAP address of the first routing identifier is a BAP address of the first donor-DU, and a destination BAP address of the second routing identifier is a BAP address of the second donor-DU.

In some embodiments, the processing portion 1602 rewrites a first routing ID carried in a BAP header of uplink data to a second routing ID.

In some embodiments, the receiving portion 1601 receives first configuration information transmitted by a donor centralized unit before the IAB-MT performs handover, the first configuration information being used for configuring replacing an IP address anchored to the first donor-DU with an IP address anchored to the second donor-DU; wherein the IP addresses are used for F1 user plane data, F1 control plane data or non-F 1 data of the IAB-node or child node;
the processing portion 1602 replaces the IP address anchored to the first donor-DU with the IP address anchored to the second donor-DU when the IAB-MT completes random access of the handover.

In some embodiments, the first configuration information of the IAB-node is transmitted by a donor centralized unit via a handover command radio resource control (RRC) message or an RRC reconfiguration message; the first configuration information of the child node is transmitted by a donor centralized unit via an RRC reconfiguration message.

In some embodiments, the first configuration information is IP address configuration information for the BAP address of the first donor-DU. For example, the first configuration information is used to change the IP address anchored to the first donor-DU for the BAP address of the first donor-DU to the IP address anchored to the second donor-DU.

In some embodiments, the path migration configuration includes: adding routing configuration containing a mapping relationship between a second routing identifier and a BAP address of a next-hop node of the IAB-node, and adding RCL channel mapping configuration used for indicating a mapping relationship between a BAP address of a prior-hop node of the IAB-node, an ingress link RLC channel identifier, the BAP of the next-hop node of the IAB-node and an egress link RLC channel identifier; a destination BAP address of the second routing identifier is a BAP address of the second donor-DU.

In some embodiments, before the IAB-MT performs handover, the receiving unit 1601 receives second configuration information used for configuring a second routing identifier transmitted by the donor centralized unit; wherein the second routing identifier is used for uplink F1 user plane data, F1 control plane data or non-F1 data of the IAB-node or the child node;
the processing portion 1602 applies the second routing identifier when the IAB-MT completes random access of the handover.

In some embodiments, the receiving unit 1601 receives third configuration information transmitted by a donor centralized unit before an IAB-MT performs handover, the third configuration information being used for configuring an IP address anchored to a second donor-DU.

In some embodiments, the third configuration information of the IAB-node is transmitted by a donor centralized unit via a handover command radio resource control (RRC) message or an RRC reconfiguration message; the third configuration information of the child node is transmitted by a donor centralized unit via an RRC reconfiguration message.

In some embodiments, the third configuration information includes configuration information used for adding an IP address anchored to a second donor-DU for a BAP address of the second donor-DU.

In some embodiments, the first donor-DU belongs to a first donor centralized unit, and the second donor-DU belongs to a second donor centralized unit; the path migration configuration is transmitted by the first donor centralized unit to an IAB-node or a child node via an F1AP message or an RRC message; wherein, an IAB-DU of the IAB-node maintains F1 connection with the first donor centralized unit.

In some embodiments, the path migration configuration includes: adding inter-donor centralized unit routing identifier rewriting configuration used for indicating a mapping relationship between a first routing identifier and a second routing identifier, adding routing configuration containing a mapping relationship between the second routing identifier and a BAP address of a next-hop node of the IAB-node, and adding RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
wherein the first routing identifier and the BAP address of the prior-hop node of the IAB-node belong to a network topological domain of the first donor centralized unit, a destination BAP address of the first routing identifier is a BAP address of the first donor-DU, the second routing identifier and the BAP address of the next-hop node of the IAB-node belong to a network topological domain of the second donor centralized unit, and a destination BAP address of the second routing identifier is a BAP address of the second donor-DU.

In some embodiments, the processing portion 1602 rewrites a first routing ID carried in a BAP header of uplink data to a second routing ID.

In some embodiments, the receiving portion 1601 receives first configuration information transmitted by a first donor centralized unit before the IAB-MT of the IAB-node performs handover, the first configuration information being used for configuring replacing an IP address anchored to the first donor-DU with an IP address anchored to the second donor-DU; wherein the IP addresses are used for F1 user plane data, F1 control plane data or non-F1 data of the IAB-node or child node;
the processing portion 1602 replaces the IP address anchored to the first donor-DU with the IP address anchored to the second donor-DU when the IAB-MT of the IAB-node completes random access of the handover.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-node device 1600 in the embodiments of the present disclosure may further include other components or modules. For detailed contents of these components or modules, relevant technologies can be referred to.

Moreover, for the sake of simplicity, FIG. 16 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, before an IAB-MT of an IAB-node performs handover, the IAB-node or a child node receives path migration configuration of uplink data transmitted by a network device, and the IAB-node or the child node applies the path migration configuration when the IAB-MT completes the handover. Thereby, the problem that uplink data is discarded can be reduced or avoided, a transmission delay and service interruption time is reduced.

### Embodiments of a fourth aspect

The embodiments of the present disclosure provide an IAB-donor device, the contents same as the embodiments of the first to third aspects are not repeated. The device e.g. may be an IAB donor-CU in an IAB system, or may be a component or component(s) or assemblies or modules configured in the IAB donor-CU.

The IAB system includes an IAB-donor device and an IAB-node device. A parent node of the IAB-node device before migration uses a first donor distribution unit (donor-DU) and a parent node of the IAB-node after the migration uses a second donor distribution unit, the first donor-DU belonging to a first donor centralized unit, and the second donor-DU belonging to a second donor centralized unit.

FIG. 17 is a schematic diagram of an IAB-donor device in the embodiments of the present disclosure. As shown in FIG. 17, the IAB-donor device 1700 includes: a transmitting portion 1701 and a receiving portion 1702. The transmitting portion 1701 transmits a path migration request message to the second donor-CU before transmitting a handover request for an IAB-MT of the IAB-node; and the receiving portion 1702 receives a path migration response message transmitted by the second donor-CU.

In some embodiments, the path migration request message and the path migration response message are transmitted via an Xn interface, and the path migration request message and the path migration response message contain an XnAP identifier of the IAB-node.

In some embodiments, the path migration request message contains a target cell identifier or a target parent node identifier for handover of the IAB-MT of the IAB-node.

In some embodiments, the path migration request message contains an IP address anchored to the first donor-DU for a BAP address of the first donor-DU, the IP address being used for F1 user plane data, F1 control plane data or non-F1 data of the IAB-node or a child node.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The IAB-donor device 1700 in the embodiments of the present disclosure may further include other components or modules. For detailed contents of these components or modules, relevant technologies can be referred to.

Moreover, for the sake of simplicity, FIG. 17 only exemplarily shows a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

As can be known from the above embodiments, before an IAB-MT of an IAB-node performs handover, the IAB-node or a child node receives path migration configuration of uplink data transmitted by a network device, and the IAB-node or the child node applies the path migration configuration when the IAB-MT completes the handover. Thereby, the problem that uplink data is discarded can be reduced or avoided, a transmission delay and service interruption time is reduced.

### Embodiments of a fifth aspect

The embodiments of the present disclosure provide a communication system, including a donor device and an IAB-node; for a network architecture of the donor device and the IAB-node, relevant technologies may be further referred to, description will be omitted here.

The embodiments of the present disclosure further provide an IAB device, which may be an IAB-donor device, or may be an IAB-node device (IAB-node or child node).

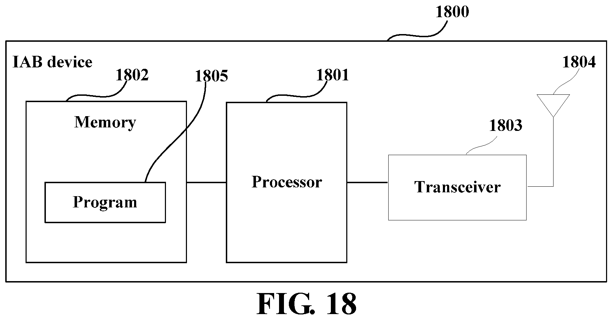

FIG. 18 is a schematic diagram of an IAB device in the embodiments of the present disclosure. As shown in FIG. 18, the IAB device 1800 may include: a processor (such as a central processing unit (CPU)) 1801 and a memory 1802; the memory 1802 is coupled to the processor 1801. The memory 1802 may store various data; moreover, also stores a program 1805 for information processing, and executes the program 1805 under the control of the central processor 1801.

For example, the processor 1801 may be configured to execute a program to implement the path migration method in the embodiments of the first aspect. For example, the processor 1801 may be configured to perform the following control: before an IAB-MT of an IAB-node performs handover, receiving path migration configuration of uplink data transmitted by a network device, and applying the path migration configuration when the IAB-MT completes the handover.

For another example, the processor 1801 may be configured to execute a program to implement the path migration method in the embodiments of the second aspect. For example, the processor 1801 may be configured to perform the following control: transmitting a path migration request message to the second donor-CU before transmitting a handover request for an IAB-MT of the IAB-node; and receiving a path migration response message transmitted by the second donor-CU.

In addition, as shown in FIG. 18, the IAB device 1800 may further include: a transceiver 1803 and an antenna 1804, etc.; wherein the functions of the components are similar to relevant arts, which are not repeated here. It's worth noting that the IAB device 1800 does not have to include all the components shown in FIG. 18. Moreover, the IAB device 1800 may also include components not shown in FIG. 18, relevant arts may be referred to.

The embodiments of the present disclosure further provide a computer readable program, wherein when an IAB-node device executes the program, the program enables a computer to execute the path migration method in the embodiments of the first aspect, in the IAB-node device.

The embodiments of the present disclosure further provide a storage medium in which a computer readable program is stored, wherein the computer readable program enables a computer to execute the path migration method in the embodiments of the first aspect, in the IAB-node device.

The embodiments of the present disclosure further provide a computer readable program, wherein when an IAB-donor device executes the program, the program enables a computer to execute the path migration method in the embodiments of the second aspect, in the IAB-donor device.

The embodiments of the present disclosure further provide a storage medium in which a computer readable program is stored, wherein the computer readable program enables a computer to execute the path migration method in the embodiments of the second aspect, in the IAB-donor device.

The device and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium can be coupled to a processor, thereby enabling the processor to read information from the storage medium, and to write the information into the storage medium; or the storage medium can be a constituent part of the processor. The processor and the storage medium can be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

Regarding the above implementations disclosed in this embodiment, the following supplements are further disclosed:
1. A path migration method, a parent node of an IAB-node before migration uses a first donor distribution unit (donor-DU) and a parent node of the IAB-node after the migration uses a second donor distribution unit, the method including:
   an IAB-node or child node, before an IAB-MT of the IAB-node performs handover, receives path migration configuration of uplink data transmitted by a network device; and
   the IAB-node or child node applies the path migration configuration when the IAB-MT completes the handover.
2. The method according to Supplement 1, wherein the first donor distribution unit (donor-DU) and the second donor distribution unit belong to the same donor centralized unit (donor-CU), and the path migration configuration is transmitted by the donor centralized unit to the IAB-node or a child node via an F1AP message or an RRC message.
3. The method according to Supplement 2, wherein the path migration configuration includes:
   adding inter-donor distribution unit routing identifier rewriting configuration used for indicating a mapping relationship between a first routing identifier and a second routing identifier,
   adding routing configuration containing a mapping relationship between the second routing identifier and a BAP address of a next-hop node of the IAB-node, and
   adding RLC channel mapping configuration used for indicating a mapping relationship between a BAP address of a prior-hop node of the IAB-node, an ingress link radio link control (RLC) channel identifier, the BAP address of the next-hop node of the IAB-node and an egress link RLC channel identifier;
   wherein a destination BAP address of the first routing identifier is a BAP address of the first donor-DU, and a destination BAP address of the second routing identifier is a BAP address of the second donor-DU.
4. The method according to Supplement 3, wherein the method further includes:
   the IAB node rewrites the first routing identifier carried in a BAP header of uplink data to the second routing identifier.
5. The method according to Supplement 3 or 4, wherein the method includes:
   the IAB-node receives first configuration information transmitted by the donor centralized unit before the IAB-MT performs handover, the first configuration information being used for configuring replacing an IP address anchored to the first donor-DU with an IP address anchored to the second donor-DU; wherein the IP addresses are used for F1 user plane data, F1 control plane data or non-F 1 data of the IAB-node.
6. The method according to Supplement 5, wherein the method further includes:
   the IAB-node replaces the IP address anchored to the first donor-DU with the IP address anchored to the second donor-DU when the IAB-MT completes random access of the handover.
7. The method according to Supplement 3 or 4, wherein the method includes:
   the child node or a parent node of the child node receives first configuration information transmitted by the donor centralized unit before the IAB-MT performs handover, the first configuration information being used for configuring replacing an IP address anchored to the first donor-DU with an IP address anchored to the second donor-DU; wherein the IP addresses are used for F1 user plane data, F1 control plane data or non-F 1 data of the child node.
8. The method according to Supplement 7, wherein the method further includes:
   the child node replaces the IP address anchored to the first donor-DU with the IP address anchored to the second donor-DU when the IAB-MT completes random access of the handover.
9. The method according to any one of Supplements 5 to 8, wherein the first configuration information of the IAB-node is transmitted by the donor centralized unit via a handover command radio resource control (RRC) message or an RRC reconfiguration message.
10. The method according to any one of Supplements 5 to 8, wherein the first configuration information of the child node is transmitted by the donor centralized unit via an RRC reconfiguration message.
11. The method according to any one of Supplements 5 to 10, wherein the first configuration information is IP address configuration information for the BAP address of the first donor-DU.
12. The method according to Supplement 11, wherein the first configuration information is used to change the IP address anchored to the first donor-DU for the BAP address of the first donor-DU to the IP address anchored to the second donor-DU.
13. The method according to Supplement 2, wherein the path migration configuration includes:
   adding routing configuration containing a mapping relationship between a second routing identifier and a BAP address of a next-hop node of the IAB-node, and
   adding RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
   wherein a destination BAP address of the second routing identifier is a BAP address of the second donor-DU.
14. The method according to Supplement 13, wherein the method further includes:
   before the IAB-MT performs handover, the IAB-node receives second configuration information used for configuring the second routing identifier transmitted by the donor centralized unit; wherein the second routing identifier is used for uplink F1 user plane data, F1 control plane data or non-F 1 data of the IAB-node.
15. The method according to Supplement 14, wherein the IAB-node applies the second routing identifier when the IAB-MT completes random access of the handover.
16. The method according to Supplement 13, wherein the method further includes:
   before the IAB-MT performs handover, the child node or a parent node of the child node receives second configuration information used for configuring the second routing identifier transmitted by the donor centralized unit; wherein the second routing identifier is used for uplink F1 user plane data, F1 control plane data or non-F 1 data of the child node.
17. The method according to Supplement 16, wherein the child node applies the second routing identifier when the IAB-MT completes random access of the handover.
18. The method according to any one of Supplements 14 to 17, wherein the method includes:
   the IAB-node receives third configuration information transmitted by the donor centralized unit before the IAB-MT performs handover, the third configuration information being used for configuring an IP address anchored to the second donor-DU.
19. The method according to any one of Supplements 14 to 17, wherein the method includes:
   the child node receives third configuration information transmitted by the donor centralized unit before the IAB-MT performs handover, the third configuration information being used for configuring an IP address anchored to the second donor-DU.
20. The method according to Supplement 18, wherein the third configuration information of the IAB-node is transmitted by the donor centralized unit via a handover command radio resource control (RRC) message or an RRC reconfiguration message.
21. The method according to Supplement 19, wherein the third configuration information of the child node is transmitted by the donor centralized unit via an RRC reconfiguration message.
22. The method according to any one of Supplements 18 to 21, wherein the third configuration information includes configuration information used for adding an IP address anchored to the second donor-DU for a BAP address of the second donor-DU.
23. The method according to Supplement 1, wherein the first donor-DU belongs to a first donor centralized unit, and the second donor-DU belongs to a second donor centralized unit; and the path migration configuration is transmitted by the first donor centralized unit to the IAB-node or the child node via an F1AP message or an RRC message;
   wherein an IAB-DU of the IAB-node maintains F1 connection with the first donor centralized unit.
24. The method according to Supplement 23, wherein the path migration configuration includes:
   adding inter-donor centralized unit routing identifier rewriting configuration used for indicating a mapping relationship between a first routing identifier and a second routing identifier,
   adding routing configuration containing a mapping relationship between the second routing identifier and a BAP address of a next-hop node of the IAB-node, and
   adding RLC channel mapping configuration used for indicating a mapping relationship between a BAP address of a prior-hop node of the IAB-node, an ingress link RLC channel identifier, the BAP address of the next-hop node of the IAB-node and an egress link RLC channel identifier;
   wherein the first routing identifier and the BAP address of the prior-hop node of the IAB-node belong to a network topological domain of the first donor centralized unit, a destination BAP address of the first routing identifier is a BAP address of the first donor-DU, the second routing identifier and the BAP address of the next-hop node of the IAB-node belong to a network topological domain of the second donor centralized unit, and a destination BAP address of the second routing identifier is a BAP address of the second donor-DU.
25. The method according to Supplement 24, wherein the method further includes:
   the IAB-node rewrites the first routing identifier carried in a BAP header of uplink data to the second routing identifier.
26. The method according to Supplement 24 or 25, wherein the method includes:
   the IAB-node receives first configuration information transmitted by the first donor centralized unit before an IAB-MT performs handover, the first configuration information being used for configuring replacing an IP address anchored to the first donor-DU with an IP address anchored to the second donor-DU; wherein the IP addresses are used for F1 user plane data, F1 control plane data or non-F 1 data of the IAB-node.
27. The method according to Supplement 26, wherein the method further includes:
   the IAB-node replaces the IP address anchored to the first donor-DU with the IP address anchored to the second donor-DU when the IAB-MT completes random access of the handover.
28. The method according to Supplement 24 or 25, wherein the method includes:
   the child node or a parent node of the child node receives first configuration information transmitted by the first donor centralized unit before the IAB-MT of the IAB-node performs handover, the first configuration information being used for configuring replacing an IP address anchored to the first donor-DU with an IP address anchored to the second donor-DU; wherein the IP addresses are used for F1 user plane data, F1 control plane data or non-F1 data of the child node.
29. The method according to Supplement 28, wherein the method further includes:
   the child node replaces the IP address anchored to the first donor-DU with the IP address anchored to the second donor-DU when the IAB-MT completes random access of the handover.
30. The method according to any one of Supplements 26 to 29, wherein the first configuration information is transmitted by the first donor centralized unit to the IAB-node via a handover command radio resource control (RRC) message or an RRC reconfiguration message.
31. The method according to any one of Supplements 26 to 29, wherein the first configuration information is transmitted by the first donor centralized unit to the child node or a parent node of the child node via an RRC reconfiguration message.
32. The method according to any one of Supplements 26 to 31, wherein the first configuration information is IP address configuration information for the BAP address of the first donor-DU.
33. The method according to Supplement 32, wherein the first configuration information is used to change the IP address anchored to the first donor-DU for the BAP address of the first donor-DU to the IP address anchored to the second donor-DU.
34. A path migration method, a parent node of an IAB-node before migration uses a first donor distribution unit (donor-DU) and a parent node of the IAB-node after the migration uses a second donor distribution unit, the first donor-DU belonging to a first donor centralized unit, and the second donor-DU belonging to a second donor centralized unit, the method including:
   the first donor centralized unit (donor-CU) transmits a path migration request message to the second donor-CU before transmitting a handover request for an IAB-MT of the IAB-node; and
   the first donor-CU receives a path migration response message transmitted by the second donor-CU.
35. The method according to Supplement 34, wherein the path migration request message and the path migration response message are transmitted via an Xn interface, and the path migration request message and the path migration response message contain an XnAP identifier of the IAB-node.
36. The method according to Supplement 34 or 35, wherein
   the path migration request message contains an IP address anchored to the first donor-DU for a BAP address of the first donor-DU, the IP address being used for F1 user plane data, F1 control plane data or non-F 1 data of the IAB-node or a child node.
37. The method according to Supplement 34 or 35, wherein
   the path migration request message contains a target cell identifier or a target parent node identifier for handover of the IAB-MT of the IAB-node.
38. The method according to any one of Supplements 34 to 37, wherein
   the path migration response message contains the first configuration information, the first configuration information being used for configuring replacing an IP address anchored to the first donor-DU with an IP address anchored to the second donor-DU.
39. The method according to Supplement 38, wherein the first configuration information is contained in an RRC reconfiguration message contained in the path migration response message for the IAB-node or the child node.
40. The method according to Supplement 38, wherein the method further includes:
   the first donor centralized unit transmits the first configuration information to the IAB-node, or to the child node or a parent node of the child node, before transmitting a handover command RRC message to the IAB-node.
41. The method according to any one of Supplements 34 to 40, wherein the method further includes:
   the first donor centralized unit (donor-CU) transmits path migration configuration of uplink data to the IAB-node, or to the child node or a parent node of the child node, before transmitting a handover command RRC message to the IAB-node.
42. An IAB-node device, including a memory and a processor, the memory storing a computer program, wherein the processor is configured to execute the path migration method according to any one of Supplements 1 to 33.
43. An IAB-donor device, including a memory and a processor, the memory storing a computer program, wherein the processor is configured to execute the path migration method according to any one of Supplements 34 to 41.
44. A communication system, including an IAB-donor device and an IAB-node device; wherein the IAB-node device is configured to execute the path migration method according to any one of Supplements 1 to 33, and the IAB-donor device is configured to execute the path migration method according to any one of Supplements 34 to 41.

## Claims

1. An integrated access and backhaul (IAB) node device, a parent node of the IAB-node before migration uses a first donor distribution unit and a parent node of the IAB-node after the migration uses a second donor distribution unit, the IAB-node device comprising:
a receiving portion configured to, before an IAB-MT of an IAB-node performs handover, receive path migration configuration of uplink data transmitted by a network device; and
a processing portion configured to apply the path migration configuration when the IAB-MT completes the handover.

2. The device according to claim 1, wherein the first donor distribution unit and the second donor distribution unit belong to the same donor centralized unit, and the path migration configuration is transmitted by the donor centralized unit to the IAB-node or a child node via an F1AP message or a radio resource control message.

3. The device according to claim 2, wherein the path migration configuration comprises: adding inter-donor distribution unit routing identifier rewriting configuration used for indicating a mapping relationship between a first routing identifier and a second routing identifier, adding routing configuration containing a mapping relationship between the second routing identifier and a backhaul adaptation protocol address of a next-hop node of the IAB-node, and adding radio link control channel mapping configuration used for indicating a mapping relationship between a backhaul adaptation protocol address of a prior-hop node of the IAB-node, an ingress link radio link control channel identifier, the backhaul adaptation protocol address of the next-hop node of the IAB-node and an egress link radio link control channel identifier;
a destination backhaul adaptation protocol address of the first routing identifier is a backhaul adaptation protocol address of the first donor distribution unit, and a destination backhaul adaptation protocol address of the second routing identifier is a backhaul adaptation protocol address of the second donor distribution unit.

4. The device according to claim 3, wherein the processing portion rewrites the first routing identifier carried in a backhaul adaptation protocol header of the uplink data to the second routing identifier.

5. The device according to claim 3, wherein before the IAB-MT performs handover, the receiving portion receives first configuration information transmitted by the donor centralized unit, the first configuration information being used for configuring replacing an IP address anchored to the first donor distribution unit with an IP address anchored to the second donor distribution unit; wherein the IP addresses are used for F1 user plane data, F1 control plane data or non-F 1 data of the IAB-node or the child node;
the processing portion replaces the IP address anchored to the first donor distribution unit with the IP address anchored to the second donor distribution unit when the IAB-node completes random access of the handover.

6. The device according to claim 5, wherein the first configuration information of the IAB-node is transmitted by the donor centralized unit via a handover command radio resource control message or a radio resource control (RRC) reconfiguration message;
the first configuration information of the child node is transmitted by the donor centralized unit via an RRC reconfiguration message.

7. The device according to claim 5, wherein the first configuration information is IP address configuration information for the backhaul adaptation protocol address of the first donor distribution unit;
the first configuration information is used to change the IP address anchored to the first donor distribution unit for the backhaul adaptation protocol address of the first donor distribution unit to the IP address anchored to the second donor distribution unit.

8. The device according to claim 2, wherein the path migration configuration comprises: adding routing configuration containing a mapping relationship between a second routing identifier and a backhaul adaptation protocol address of a next-hop node of the IAB-node, and adding radio link control channel mapping configuration used for indicating a mapping relationship between a backhaul adaptation protocol address of a prior-hop node of the IAB-node, an ingress link radio link control channel identifier, the backhaul adaptation protocol address of the next-hop node of the IAB-node and an egress link radio link control channel identifier;
a destination backhaul adaptation protocol address of the second routing identifier is a backhaul adaptation protocol address of the second donor distribution unit.

9. The device according to claim 8, wherein before the IAB-MT performs handover, the receiving unit receives second configuration information used for configuring a second routing identifier transmitted by the donor centralized unit; wherein the second routing identifier is used for uplink F1 user plane data, F1 control plane data or non-F1 data of the IAB-node or the child node;
the processing portion applies the second routing identifier when the IAB-node completes random access of the handover.

10. The device according to claim 8, wherein before the IAB-MT performs handover, the receiving portion receives third configuration information transmitted by the donor centralized unit, the third configuration information being used to configure the IP address anchored to the second donor distribution unit.

11. The device according to claim 10, wherein the third configuration information of the IAB-node is transmitted by the donor centralized unit via a handover command radio resource control message or a radio resource control (RRC) reconfiguration message;
the third configuration information of the child node is transmitted by the donor centralized unit via an RRC reconfiguration message.

12. The device according to claim 10, wherein the third configuration information comprises configuration information used for adding the IP address anchored to the second donor distribution unit for the backhaul adaptation protocol address of the second donor distribution unit.

13. The device according to claim 1, wherein the first donor distribution unit belongs to a first donor centralized unit, and the second donor distribution unit belongs to a second donor centralized unit; and the path migration configuration is transmitted by the first donor centralized unit to the IAB-node or the child node via an F1AP message or a radio resource control message;
wherein an IAB-DU of the IAB-node maintains F1 connection with the first donor centralized unit.

14. The device according to claim 13, wherein the path migration configuration comprises: adding inter-donor centralized unit routing identifier rewriting configuration used for indicating a mapping relationship between a first routing identifier and a second routing identifier, adding routing configuration containing a mapping relationship between the second routing identifier and a backhaul adaptation protocol address of a next-hop node of the IAB-node, and adding radio link control channel mapping configuration used for indicating a mapping relationship between a backhaul adaptation protocol address of a prior-hop node of the IAB-node, an ingress link radio link control channel identifier, the backhaul adaptation protocol address of the next-hop node of the IAB-node and an egress link radio link control channel identifier;
wherein the first routing identifier and the backhaul adaptation protocol address of the prior-hop node of the IAB-node belong to a network topological domain of the first donor centralized unit, a destination backhaul adaptation protocol address of the first routing identifier is a backhaul adaptation protocol address of the first donor distribution unit, the second routing identifier and the backhaul adaptation protocol address of the next-hop node of the IAB-node belong to a network topological domain of the second donor centralized unit, and a destination backhaul adaptation protocol address of the second routing identifier is a backhaul adaptation protocol address of the second donor distribution unit.

15. The device according to claim 14, wherein the processing portion rewrites the first routing identifier carried in a backhaul adaptation protocol header of the uplink data to the second routing identifier.

16. The device according to claim 14, wherein before the IAB-MT of the IAB-node performs handover, the receiving portion receives first configuration information transmitted by the first donor centralized unit, the first configuration information being used for configuring replacing an IP address anchored to the first donor distribution unit with an IP address anchored to the second donor distribution unit; wherein the IP addresses are used for F1 user plane data, F1 control plane data or non-F 1 data of the IAB-node or the child node;
the processing portion replaces the IP address anchored to the first donor distribution unit with the IP address anchored to the second donor distribution unit when the IAB-MT of the IAB-node completes random access of the handover.

17. An IAB-donor device, a parent node of an IAB-node before migration uses a first donor distribution unit and a parent node of the IAB-node after the migration uses a second donor distribution unit, the first donor distribution unit belonging to a first donor centralized unit, and the second donor distribution unit belonging to a second donor centralized unit, and the device comprising:
a transmitting portion configured to transmit a path migration request message to the second donor centralized unit before transmitting a handover request for an IAB-MT of the IAB-node; and
a receiving portion configured to receive a path migration response message transmitted by the second donor centralized unit.

18. The device according to claim 17, wherein the path migration request message and the path migration response message are transmitted via an Xn interface, and the path migration request message and the path migration response message contain an XnAP identifier of the IAB-node.

19. The device according to claim 17, wherein the path migration request message contains an IP address anchored to the first donor distribution unit for a backhaul adaptation protocol address of the first donor distribution unit, the IP address being used for F1 user plane data, F1 control plane data or non-F 1 data of the IAB-node or a child node.

20. An integrated access and backhaul (IAB) system, including an IAB-donor device and an IAB-node device;
wherein a parent node of an IAB-node device before migration uses a first donor distribution unit and a parent node of the IAB-node device after the migration uses a second donor distribution unit, before an IAB-MT of an IAB-node performs handover, the IAB-node device receives path migration configuration of uplink data transmitted by a network device, and applies the path migration configuration when the IAB-MT completes the handover.
